# EUROPEAN PATENT SPECIFICATION

(11) **EP 4 524 327 B1**
(45) Date of publication and mention of the grant of the patent: **01.07.2026**
(21) Application number: 24461615.7
(22) Date of filing: 10.09.2024
(51) Int. Cl.: E02F 9/08

(54) **DRIVE SYSTEM FOR MULTI-PURPOSE MACHINES**
ANTRIEBSSYSTEM FÜR MEHRZWECKMASCHINEN
SYSTÈME D'ENTRAÎNEMENT POUR MACHINES POLYVALENTES

(30) Priority: 11.09.2023 PL 44607523
(43) Date of publication of application: 19.03.2025
(73) Proprietor: Advanced Robotic Engineering Sp. z o.o., 54-156 Wroclaw (PL)
(72) Inventor: Jakubowski, Krzysztof, 54-320 Wroclaw (PL); Derlukiewicz, Damian, 52-215 Wroclaw (PL)
(74) Representative: Czarnik, Maciej

(56) References cited:
- EP-A1- 3 901 380
- CN-A- 104 779 742
- PL-B1- 239 513
- US-A1- 2017 306 588

## Description

The invention relates to a drive system for multi-purpose machines to be used in cases where it is necessary to supply power from two ultimate power sources for continuity or improvement of operation in different field conditions.

US patent application No. US20170306588 A1 discloses a known solution for a portable power system for an electrically driven work machine. The machine described in this application is connected under normal operation to a power supply via an electrical cable to an AC source. In order to be able to supply the required current from outside the grid it includes a DC energy-storage arrangement that, including a secondary source of power, can store energy and, when necessary, supply energy in electrical form. A coupling arrangement makes it possible to choose between connecting the motor to the primary or the secondary source of power. The system also features a rectifier and an inverted rectifier as independent parts thereof.

Polish patent PL239513 B1 discloses a known independent hybrid drive system for multi-purpose machines comprising at least two hydraulic pumps powered by separate power sources, whereby the first hydraulic pump is powered by an AC electric motor and the second hydraulic pump is powered by a PMAC permanent magnet AC motor, whereby each motor is connected to the hydraulic pumps by a coupling and then connected to the motive power or working drive via a distributor with a mechanical or electromagnetic switch.

The disadvantage of the solutions presented above is that the inverter is a physically separate device from the rest of the system, requiring additional cooling to be provided, the appropriate location of the phase wires to limit emissions for EMC testing and space in the multi-purpose machine for placing it.

Chinese patent application CN104779742 A discloses a known solution for a cooling device for an AC motor, which comprises a rotor, a truncated cone-shaped air collector, a frequency-conversion fan motor, an air pressure gauge and a cooling unit, wherein the truncated cone-shaped air collector is located in the air collector shell and the rotor is mounted on the output shaft of the frequency-conversion fan motor; the frequency-conversion fan motor is mounted in the fan box body; an air pressure gauge is mounted on the fan box housing; the cooling unit includes a radiator and a filter; the radiator includes a radiator body, a water inlet pipe and a water outlet pipe located on the radiator body, cooling sheets, a radiator air inlet formed by the cooling sheets and an air duct interface formed by an extension of the radiator body, and the air duct interface forms an outlet of cooler air; the filter includes a filter arm, an N-type filter element located on the filter frame, a mounting frame, a filter and a low efficiency filter element. The inlet air temperature can be continuously maintained at around 25°C, the cooling effects are good, the amount of ventilation is high, the motor temperature rise is normal, the winding is insulated and stable, and the insulated material can be effectively prevented from aging and embrittlement.

The aim of the invention is to develop a hybrid system for multi-purpose machines comprising a combination of AC and DC motors with battery power supply characterised by the required level of electromagnetic compatibility of the DC motor power system, small dimensions and low material consumption, as well as safe operation. The invention additionally aims to ensure that the system is adequately cooled to meet the requirements outlined above and to reduce radiated emissions controlled during EMC certification testing.

The object of the invention is a drive system for multi-purpose machines comprising at least two electric motors, one motor being an AC electric motor supplied from an external grid and the other motor being a PMSM permanent magnet AC electric motor supplied from a battery via an inverter is in the form of a brushless electric motor, whereby the electric motors are connected by means of couplings to the hydraulic pumps, and the hydraulic pumps are connected to the motive power and/or the working drive via a distributor with a mechanical or electromagnetic switch, characterised in that the inverter is located inside the housing of the PMSM permanent magnet AC electric motor.

Preferably, the inverter of the drive system is positioned in the axis of the PMSM permanent magnet AC electric motor on its shaft on non-drive side. Placing the inverter in this position allows a reduction of the system dimensions associated with the optimal shape of the drive system for placement in a multi-purpose machine.

Particularly preferably, the inverter of the drive system is positioned close to the rotor of the PMSM permanent magnet AC motor. This arrangement ensures a minimum length of phase wires from the rotor to the inverter, which is beneficial for reducing radiation emissions.

Preferably, the drive system is equipped with two batteries feeding the inverter integrated into the PMAC permanent magnet AC motor and one battery is located in the chassis and the other one is located in the undercarriage. The installation of two batteries provides flexibility in battery location in terms of design and functionality.

Particularly preferably, the battery of the drive system consists of interchangeable battery packs configured in such a way that they can be recharged. This feature allows for an increase in the operating time of the machine, which enhances its operational capabilities.

Equally preferably, the drive system according to the invention is provided with a fan connected in series with a cooling duct and then with an AC electric motor, whereby the cooling duct is connected to an additional cooling duct, which in turn is connected to a PMSM permanent magnet AC electric motor integrated with an inverter. This solution allows the PMSM motor to be cooled down after operation using the AC motor fan.

Particularly preferably, the additional cooling duct is equipped with an additional outlet through which the air is directed to the battery mounting area. Equipping the cooling duct with an additional outlet enables the batteries supplying the PMSM motor to be cooled after operation without consuming energy therefrom.

Particularly preferably, the PMSM permanent magnet AC motor is equipped with an exchanger. The exchanger additionally enables the heat energy present in the motor and the inverter to be released.

The invention is illustrated in the embodiment examples and in the drawings, of which:

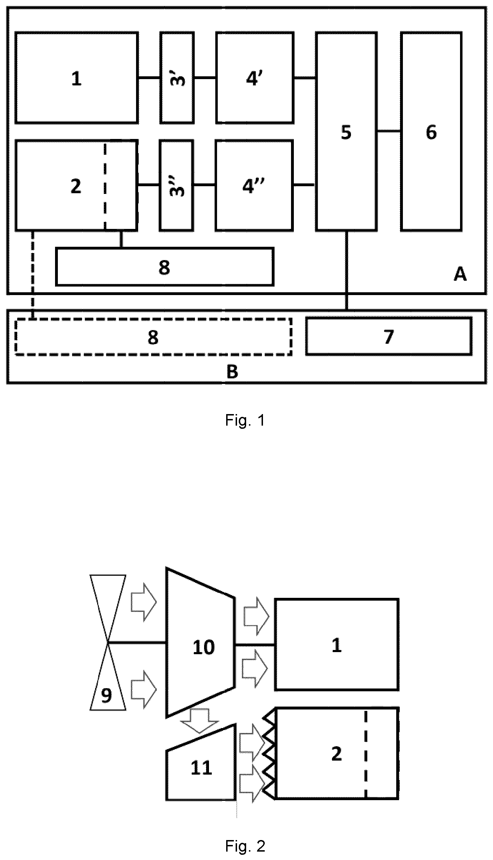

- Fig. 1: shows the components of the system without cooling elements, whereby the dotted line indicates an alternative battery placement,
- Fig. 2 and 3: show the part of the system responsible for its cooling,
- Fig. 4: illustrates the placement of the inverter in a PMSM permanent magnet AC electric motor.

### Embodiment 1

The drive system of multi-purpose machines comprises two hydraulic pumps 4', 4' powered by separate power sources, whereby the first hydraulic pump 4' is powered by an AC electric motor 1 and the second hydraulic pump 4'' is powered by a PMSM permanent magnet electric motor 2, whereby an inverter 21 is integrated in the housing 22 of the motor 2. Each of the motors 1, 2 is connected to the hydraulic pumps 4', 4" by means of a coupling 3', 3" and is further connected to the motive power 7 and the working drive 6 via a distributor 5 equipped with a mechanical or electromagnetic switch. The PMSM permanent magnet AC electric motor 2 together with the inverter 21 integrated in one housing is in the form of a brushless electric motor, whereby the inverter 21 integrated in the PMSM permanent magnet AC electric motor 2 is powered by a battery 8 located in the body A.

In one version of the embodiment, the battery 8 is located in the chassis B and then forms a set of interchangeable battery packs to be recharged outside the machine. This solution allows the pack to be recharged outside the robot, which enables the system to operate on charged packs outside the machine.

In another version of the embodiment, the system may be equipped with two batteries 8, one of which is located in the undercarriage A and the other battery 8 is located in the chassis B. Such a solution allows the machine to be operated without interruption during the battery change and provides better weight distribution on the machine.

In a preferred embodiment, the system is equipped with a fan 9 to cool the system. The fan 9 is connected in series with the cooling channel 10 of the motor 1. The cooling duct 10 may additionally be connected to an additional cooling duct 11 intended to cool the motor 2, through which the air is further directed via an outlet to the exchanger 25 of the PMSM permanent magnet electric motor 2 and the integrated inverter 21. The additional cooling duct 11 may have an additional outlet through which air is directed to the battery mounting area 8.

### Embodiment 2

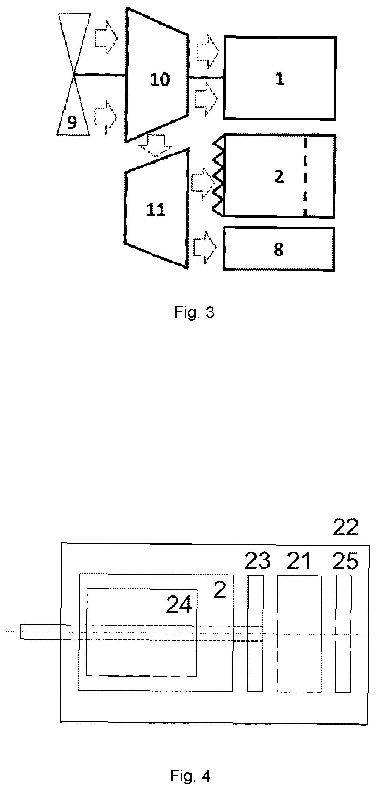

In a preferred embodiment, the drive system for multi-purpose machines illustrated in fig. 4 comprises an inverter 21 located in the same housing 22 with the motor 2, whereby the inverter 21 is positioned in the axis of the motor 2 close to the rotor 24 on the shaft on non-drive side 23. During the research work for the development of the drive for a multi-purpose machine, it was assumed that additional cooling would need to be installed, resulting from the idea of placing the inverter on the motor. This need is due to the fact that such a placement of the inverter makes the heat from motor 2 and inverter 21 add up in the system. However, during testing, it unexpectedly turned out that in multi-purpose machines where the drive system is only used to move the machine, the problem of overheating of motor 2 and inverter 21 did not arise, so there was no need to install additional cooling. In order to ensure continuous operation under various conditions, inverter 21 was configured to reduce the output of motor 2 if its temperature approached its maximum. When testing the drive in a multi-purpose machine using a motor with a nominal power of 2kW, a reduction in power of approximately 35% occurred after the temperature on the inverter rose to approximately 80°C, thus preventing the temperature from rising while no reduction in the drive functionality of the multi-purpose machine was observed for machine movement. To further increase the heat exchange of the system behind the inverter 21, a passive air heat exchanger 25 can be used in the system.

Tests have also been carried out with the inverter 21 positioned elsewhere, including above the motor 2, but the tests did not find any beneficial changes in the temperatures achieved by the system compared to the original solution with the inverter 21 positioned separately, nor was it possible to cool motor 2 and inverter 21 simultaneously, and the dimensions of such a drive limited the possibility to use it in multi-purpose machines.

## Claims

1. A drive system for multi-purpose machines comprising at least two electric motors (1, 2), of which one motor is an AC electric motor (1) and is supplied from an external grid and the other motor is a PMSM permanent magnet AC electric motor (2) supplied from a battery (8', 8") via an inverter (21) is in the form of a brushless electric motor, whereby the electric motors (1, 2) are connected by means of couplings (3', 3") to the hydraulic pumps (4', 4"), and the hydraulic pumps (4', 4") are connected to the motive power (7) and/or the working drive (6) via a distributor (5) with a mechanical or electromagnetic switch, **characterised in that** the inverter (21) is located inside the housing of the PMSM permanent magnet AC electric motor (2).

2. The drive system according to Claim 1, **characterised in that** the inverter (21) of the drive system is positioned in the axis of the PMSM permanent magnet AC electric motor (2) on its shaft on non-drive side (23).

3. The drive system according to Claim 2, **characterised in that** the inverter (21) of the drive system is positioned close to the rotor (24) of the PMSM permanent magnet AC electric motor (2).

4. The drive system according to Claim 1, **characterised in that** the system is equipped with two batteries (8', 8") feeding the inverter (21) integrated into the PMAC permanent magnet AC motor (2) and one battery (8') is located in the chassis and the other one (8") is located in the undercarriage.

5. The drive system according to Claim 1 or 2, **characterised in that** the battery (8', 8") consists of interchangeable battery packs configured in such a way that they can be recharged.

6. The drive system according to Claim 4, **characterised in that** the system is provided with a fan (9) connected in series with a cooling duct (10) and then with an AC electric motor (1), whereby the cooling duct (10) is connected to an additional cooling duct (11), which in turn is connected to a PMSM permanent magnet AC electric motor (2) integrated with an inverter (21).

7. The drive system according to Claim 4, **characterised in that** the additional cooling duct (11) may have an additional outlet through which air is directed to the battery mounting area (8).

8. The drive system according to Claim 5, **characterised in that** the PMSM permanent magnet AC electric motor (2) is equipped with a heat exchanger (25).

## Patentansprüche

1. Antriebssystem für Mehrzweckmaschinen, umfassend mindestens zwei Elektromotoren (1, 2), wobei ein Motor ein Wechselstrom-Elektromotor (1) ist und aus einem externen Netz gespeist wird und der andere Motor ein permanenterregter Synchron-Wechselstrommotor (PMSM) (2) ist, der über einen Wechselrichter (21) aus einer Batterie (8', 8") gespeist wird und als bürstenloser Elektromotor ausgebildet ist, wobei die Elektromotoren (1, 2) mittels Kupplungen (3', 3") mit Hydraulikpumpen (4', 4") verbunden sind und die Hydraulikpumpen (4', 4") über einen Verteiler (5) mit mechanischem oder elektromagnetischem Schalter mit dem Fahrantrieb (7) und/oder dem Arbeitsantrieb (6) verbunden sind, **dadurch gekennzeichnet, dass** der Wechselrichter (21) innerhalb des Gehäuses des permanenterregten Synchron-Wechselstrommotors (PMSM) (2) angeordnet ist.

2. Antriebssystem nach Anspruch 1, **dadurch gekennzeichnet, dass** der Wechselrichter (21) des Antriebssystems in der Achse des permanenterregten Synchron-Wechselstrommotors (PMSM) (2) auf dessen Welle auf der Nichtantriebsseite (23) angeordnet ist.

3. Antriebssystem nach Anspruch 2, **dadurch gekennzeichnet, dass** der Wechselrichter (21) des Antriebssystems in der Nähe des Rotors (24) des permanenterregten Synchron-Wechselstrommotors (PMSM) (2) angeordnet ist.

4. Antriebssystem nach Anspruch 1, **dadurch gekennzeichnet, dass** das System mit zwei Batterien (8', 8") ausgestattet ist, die den in den PMAC-Permanentmagnet-Wechselstrommotor (2) integrierten Wechselrichter (21) speisen, wobei eine Batterie (8') im Fahrgestell angeordnet ist und die andere Batterie (8") im Unterwagen angeordnet ist.

5. Antriebssystem nach Anspruch 1 oder 2, **dadurch gekennzeichnet, dass** die Batterie (8', 8") aus austauschbaren Batteriemodulen besteht, die so ausgelegt sind, dass sie wiederaufladbar sind.

6. Antriebssystem nach Anspruch 4, **dadurch gekennzeichnet, dass** das System mit einem Lüfter (9) ausgestattet ist, der in Reihe mit einem Kühlkanal (10) und anschließend mit einem Wechselstrom-Elektromotor (1) verbunden ist, wobei der Kühlkanal (10) mit einem zusätzlichen Kühlkanal (11) verbunden ist, der wiederum mit einem permanenterregten Synchron-Wechselstrommotor (PMSM) (2) verbunden ist, der mit einem Wechselrichter (21) integriert ist.

7. Antriebssystem nach Anspruch 4, **dadurch gekennzeichnet, dass** der zusätzliche Kühlkanal (11) einen zusätzlichen Auslass aufweisen kann, über den Luft in den Batteriebereich (8) geleitet wird.

8. Antriebssystem nach Anspruch 5, **dadurch gekennzeichnet, dass** der permanenterregte Synchron-Wechselstrommotor (PMSM) (2) mit einem Wärmetauscher (25) ausgestattet ist.

## Revendications

1. Un système d'entraînement pour machines polyvalentes comprenant au moins deux moteurs électriques (1, 2), dont un moteur est un moteur électrique (1) à courant alternatif alimenté à partir d'un réseau externe et l'autre moteur est un moteur électrique (2) synchrone à aimants permanents (PMSM) alimenté par une batterie (8', 8") via un onduleur (21), sous la forme d'un moteur électrique sans balais, les moteurs électriques (1, 2) étant reliés au moyen d'accouplements (3', 3") aux pompes hydrauliques (4', 4"), et les pompes hydrauliques (4', 4") étant reliées à l'organe de propulsion (7) et/ou à l'entraînement de travail (6) via un distributeur (5) comportant un commutateur mécanique ou électrique, **caractérisé en ce que** l'onduleur (21) est situé à l'intérieur du carter du moteur électrique (2) synchrone à aimants permanents (PMSM).

2. Le système selon la revendication 1, **caractérisé en ce que** l'onduleur (21) du système est positionné dans l'axe du moteur électrique (2) synchrone à aimants permanents (PMSM), sur son arbre du côté non entraîné (23).

3. Le système selon la revendication 2, **caractérisé en ce que** l'onduleur (21) du système est positionné à proximité du rotor (24) du moteur électrique (2) synchrone à aimants permanents (PMSM).

4. Le système selon la revendication 1, **caractérisé en ce que** le système est équipé de deux batteries (8', 8") alimentant l'onduleur (21) intégré au moteur électrique (2) synchrone à aimants permanents (PMAC), une batterie (8') étant située dans le châssis et l'autre (8") étant située dans le train de roulement.

5. Le système selon la revendication 1 ou 2, **caractérisé en ce que** la batterie (8', 8") est constituée de modules de batteries interchangeables configurés de manière à pouvoir être rechargés.

6. Le système selon la revendication 4, **caractérisé en ce que** le système est pourvu d'un ventilateur (9) relié en série à un conduit de refroidissement (10), puis à un moteur électrique (1) à courant alternatif, ledit conduit de refroidissement (10) étant relié à un conduit de refroidissement supplémentaire (11), lequel est relié à un moteur électrique (2) synchrone à aimants permanents (PMSM) intégré à un onduleur (21).

7. Le système selon la revendication 4, **caractérisé en ce que** le conduit de refroidissement supplémentaire (11) peut comporter une sortie supplémentaire par laquelle l'air est dirigé vers la zone de montage de la batterie (8).

8. Le système selon la revendication 5, **caractérisé en ce que** le moteur électrique (2) synchrone à aimants permanents (PMSM) est équipé d'un échangeur de chaleur (25).
